# EUROPEAN PATENT APPLICATION

(11) **EP 3 858 463 A1**
(43) Date of publication of application: **04.08.2021**
(21) Application number: 19865634.0
(22) Date of filing: 11.09.2019
(51) Int. Cl.: B01D 53/047

(54) **INSTALLATION AND METHOD FOR RECOVERING GASEOUS SUBSTANCES FROM GAS FLOWS**

(30) Priority: 29.09.2018 ES 201830944
(71) Applicant: Bluegeneration, S.L., 28045 Madrid (ES)
(72) Inventor: CARLOS M., Padilla Moreno, 28045 Madrid (ES)
(74) Representative: Urizar Anasagasti, Jesus Maria
(86) International application number: PCT/ES2019/070601
(87) International publication number: WO 2020/065107

(57) **Abstract**

An installation and method for recovering gaseous substances from gas flows comprising a first gas-treatment module (module 1) to receive a first inlet gas flow (1) in which the temperature and pressure are controlled in order to dry said flow by removing water, nitrogen and sulfur oxides, unburned substances and other solids in suspension, a second CO₂ separation module (module 2) in which the first outlet flow (13) from module 1 is treated using a PSA adsorption/desorption process to separate the gases selected, thereby enriching the third outlet flow (27), and a third, optional module (module 3) in which the CO₂ purification process is carried out and in which the third outlet flow (27) from module 2 is treated using a PSA adsorption/desorption process to separate the gases selected, thereby enriching the fifth outlet flow (44) from module 3.

## Description

### OBJECT OF THE INVENTION

The present invention can be included in the technical field of the treatment of any gas flow made up of atmospheric gases, particularly, from the treatment of combustion exhaust gases, among other mixtures.

Said installation and method can be applied for the recovery of any gaseous substance which is forming part of the gas flow to be separated.

The object of the invention relates to an installation, the control system thereof and a method for recovering substances, in particular greenhouse gases, mainly carbon dioxide (CO₂), from gas flows, depleting said gas flows in the recovered substances.

### BACKGROUND OF THE INVENTION

In the next few years, based on compliance with EU regulations and the COP21 (Paris) and Kyoto agreements, it will be necessary to reduce the emission of greenhouse gases beyond what can be reduced by means of energy efficiency techniques and by substitution with renewable energy sources. The most important of said greenhouse gases is CO₂, although it is not the only one.

One of the ways to carry out reductions in the emissions of said gases is to use means for separating the gaseous substances contained in gas flows with the objective of capturing the greenhouse gases.

Until now, the methods used for the separation of gaseous substances were mainly focused on physical-chemical processes which seek to use the polarity/apolarity, the molecular size, the oxidizing/reducing characteristics and the change in state of the substances making up the gas flow. Said methods are highly demanding in amounts of energy and/or comprise the elaboration of intermediate chemical products which are harmful to the environment, which implies high safety costs in order to avoid the release into the atmosphere of said harmful products.

Comparing with different previous patents, it is observed that the system proposed as device of the present invention is substantially different for the preferred embodiment of the present invention.

### Patent US8052777 "Vessel, system, and process for minimizing unequal flow distribution".

Description: Chambers for PSA (Pressure Swing Adsorption) processes with internal partitions for homogeneous flow distribution. These systems can contain one or more walls that make up different beds of adsorbent material, leaving two different sides in the shape of a bell to diffuse the flow in the chamber.

Analysis: System with two chambers operating in false continuous, one adsorbing and the other desorbing, in the PSA process. Initially created to purify streams of H2 with a high percentage of this gas, and with adsorbent material such as Zeolite A or X, aluminas, etc. The system describes the PSA process directly without the ability to allow control over the concentration of the outlet streams (27) or (44) of the system proposed as the device of the present invention.

### Patent US8268043B2 "Modular compact adsorption bed"

Description: Modular and compact structure of adsorbent beds. In front of conventional bed chambers, this structure has a plurality of beds connected to form the integrated structure. It offers great product separation capacity per unit volume compared to conventional ones. The modular design presented returns low manufacturing costs and ease of assembly transport and repairs, as well as high simplicity when loading adsorbent material.

Analysis: Suitable to house adsorbents in order to capture CO2, N2 or H2O. The system describes the PSA process directly without the ability to allow control over the concentration of the outlet streams (27) or (44) of the system proposed as the device of the present invention.

### Patent US6994111 "Toroidal vessel for uniform, plug-flow fluid distribution applications"

Description: This design is an improvement of conventional adsorption chambers, whose work is of the "plug-flow fluids applications" type, processes with an inlet and an outlet in which a uniform distribution of the flow inside is desired (applications chromatography or adsorption bed processes). The proposed chamber is of the toroidal type that allows an efficient laminar distribution.

Analysis: Chamber design that pursues concise objectives, these being to treat a flow with uniform and homogeneous distributions and with large exchange areas. Toroidal chamber, with inputs in the lower part and outputs in the upper part. The system describes the PSA process directly without the ability to allow control over the concentration of the outlet streams (27) or (44) of the system proposed as the device of the present invention.

### Patent US1683567A2 "Reactor with an annular adsorptively active bed and an annular inert bed"

Description: The system is made up of multi-cameras. One of the internal rings or sub-chambers of the system houses the adsorbent material, while the other chamber contains a material inert to the adsorption process that is created in the first, both separated by a permeable gas or liquid. The gas inlet to be processed is introduced through the feed and is processed while it flows to the outermost ring, being extracted through the connection to the outside.

Analysis: Device similar to that analyzed in previous patent US 6994111, the main difference between the two being the guiding of the effluent inside the chamber, from inside to outside concentric ring. The system describes the PSA process directly without the ability to allow control over the concentration of the outlet streams (27) or (44) of the system proposed as the device of the present invention. In addition, this system requires other intermediates for its operation in addition to the initial porous adsorbent material.

### Patent EP1500424A1 "Pressure Swing Adsorption system multi-chamber canister"

Description: Multi-chamber system for PSA processes. An initial chamber receives the compressed fluid for the process and distributes it evenly to the sieves with adsorbent material type Zeolite. The chambers have multiple internal compartments to, among other objectives, maintain a uniform temperature in chambers, this also serves to promote adsorption and not have large thermal gradients that would disturb the uniformity of the gas concentration in the chamber.

Analysis: Chamber aimed at improving the PSA adsorption process initially designed to treat atmospheric air that will be fed through the compressor that can be seen in the figure in the upper part of the chamber. Chamber not concentrically compartmentalized but with parallel axis arrangement. The system describes the PSA process directly without the ability to allow control over the concentration of the outlet streams (27) or (44) of the system proposed as the device of the present invention.

### Patent US5931022 "Air purification process with thermal regeneration"

Description: Use of alumina-type adsorbent, such as Zeolite 13X (negatively charged aluminosilicates), in PSA processes for purification of gas streams by removing CO2. A process of regeneration of the adsorbent is proposed, according to which the adsorbent bed will be heated to a certain temperature, eliminating the stored remains of CO2 and H2O from the material. This process is necessary since, despite the initial conditioning, a small percentage of water always enters in vapor form, which after certain adsorption / desorption cycles succumbs the adsorbent capacity of the Zeolite. The proposed process consists of a periodic heating after certain cycles of adsorption / desorption, heating.

Analysis: System that uses adsorbent material type Zeolite X. PSA processes for CO2 capture. Regeneration of the bed after successive adsorption / desorption cycles to remove residual CO2 and H2O not desorbed in the desorption phase by applying heat (thermal regeneration). The temperature of thermal regeneration, when it comes to processes such as those dealt with in the patent, is in the optimal range of (100-250°C). The system describes the PSA process directly without the ability to allow control over the concentration of the outlet streams (27) or (44) of the system proposed as the device of the present invention. Likewise, it introduces heating of the fluid bed to improve its capacity for cyclical regeneration. It is a PTSA process, completely different from the PSA process proposed as the device of the present invention.

### Patent US6362122 "Heating the composite of zeolite and binder with aqueous caustic solution; washing, drying and roasting; decarboxylation "

Description: Process for the regeneration of Zeolite-type composite materials after their use in adsorption, for example in adsorption of carbonaceous compounds. The process consists of putting the material in contact with a caustic solution, such as sodium hydroxide, isolating the compound, washing with water, drying and, finally, calcining. The result is a regenerated material. The contact with the aqueous caustic solution is carried out between 20 and 110°C for a time of 1 to 48 hours, subsequently it is washed with water and dried. The calcination phase is carried out between 500 and 700°C for a time of 1 to 24 hours.

Analysis: Regeneration of adsorbent materials, Zeolites among the suitable ones. Regeneration proposal with caustic solution, process sequence: Contact with solution under isolation conditions (20 / 110°C; 1/48 hours). Contact with H2O and subsequent drying. Calcination (500/700 ° C; 1/24 hours). It is a PTSA (Pressure and Thermal Swing Adsorption) process, completely different from the PSA process proposed as the device of the present invention, which does not require cyclic regeneration.

### Patent US6402814 "Adsorption, regeneration, depressurization cycle"

Description: The described regeneration process, which involves depressurization of the chambers after adsorption, includes a heating phase, during which the porous bed is purged with a gas, and a cooling phase, during which the porous bed is purged with a cooling gas. The process refers to the treatment of beds in TSA (Thermal Swing Adsorption) processes with alumina or zeolite-type adsorbents (X, L, XLA, etc.) to purify air currents (removing CO2 and [H2O] v) destined for plants. located downstream of distillation or cryogenics.

Analysis: Process designed for the regeneration of type X, L and XLA Zeolites, initially designed to work in TSA processes. Succession of the process proposed in the patent: Chamber depressurization after adsorption. Heating. Gas purged. Gas cooling. It is a TSA process, completely different from

### Patent EP1574246A1 "Periodic high temperature regeneration of thermal swing adsorption systems"

Description: Improved system type TSA to avoid damage caused by water in the CO2 adsorption system of gas streams adsorbing with Zeolite X. This fact is solved by heating the adsorbent bed periodically to a temperature higher than the design temperature of the phase desorption. It is presented as an alternative, or complement, to the typical dehumidification processes in which the gas stream is made to flow through a bed, prior to the chamber, of silica gel or alumina.

Analysis: Regeneration in the TSA process. Proposed process: Initially it is adsorbed by contacting the gas stream with a selective adsorbent to remove the desired components from the stream. Once the adsorption is finished, it is heated by heating at a temperature in the range of (40-400) °C. Chamber and porous bed cooling down to the initial process temperature. Periodically, and not between cycles, a second regeneration is carried out preferably between 200 and 400°C, also, in a second phase of experimentation, the temperature being strictly 50°C or more above that of the first regeneration (first regeneration: between 40 and 400 ° C). It is a TSA process, completely different from the PSA process proposed as the device of the present invention, which does not require cyclic regeneration.

### Patent US5968234A "Adsorption of water and carbon dioxide onto solid adsorbent to separate from feed air to be purified, periodically regenerating adsorbent with portion of nitrogen-containing compressed gas from the air separation unit (ASU)"

Description: Regeneration system for adsorbent materials type Zeolite X, Y, A, silica-gel, chabazite, mordenite and mixtures of them when they begin to present low yields in the adsorption of CO2. To carry out the proposed thermal regeneration, a current enriched in N2 is used, specifically using the current formed by the molecules that the material does not capture during the adsorption phase. This regenerative stream undergoes a multistage compression process before regenerating, which provides it with a considerable pressure increase.

Analysis: Regeneration for adsorbent materials type Zeolite X, Y, A, ..., which have been used in CO2 and / or [H2O] v capture processes. Through a multistage compression process, the part of the stream not adsorbed at high pressure is introduced into the chamber. The high pressure stream will be highly enriched in N2 and will avoid having traces of CO2 and H2O as well as hydrocarbons. It is a process for the regeneration of porous materials, not separation or purification, completely different from the PSA process proposed as the device of the present invention.

### Patent US5938819A "Preferential adsorption of carbon dioxide at low operating pressure followed by regeneration of adsorbent by purging with dry air; simplification "

Description: Separation in the PSA process in large amounts of CO2 from an effluent mainly composed of CH4, the adsorbent is of a type rich in natural Na. The removal in the regeneration of the residual CO2 that collapses and depletes the adsorbent material is carried out at moderate pressures, close to atmospheric, and with a high volume of air. In this way, the CO2 performs a leaching process (in metallurgy: extraction from a mineral of a species of interest by means of reagents) and leaves the adsorbent bed, returning the adsorbent capacity. Evaluating results with different modes of operation it is determined that the large amount of air is more influential than high pressure.

Analysis: PSA process to adsorb CO2 and generate effluent rich in CH4 through the use of material rich in natural Na. In the regeneration phase, instead of high pressures to attack the material, it subjects it to moderate pressures but high volumes of air. The system describes the PSA process directly without the ability to allow control over the concentration of the outlet streams (27) or (44) of the system proposed as the device of the present invention.

### Patent US0061747 "Dynamic and continuous control for pressure swing adsorption"

Description: Parameter control process to regulate PSA gaseous flow treatment system. In the "example" case shown in the patent, an air flow is treated to separate O2 from N2 by means of Zeolites. The objective of this system is to monitor in real time at least one flow parameter (P, T, flow,% of some component, T dew, humidity, etc.). The monitored parameters are compared with threshold values (critical values that, upon detection, will trigger actions on the system components). The system of this patent consists of a PSA block, where adsorption is carried out, and a "sentinel" block, which continuously monitors the desired parameters. This control system is valid for CO2 capture systems (exhaust from plants, factories, etc.), NH3 or H2S (refineries).

Analysis: Control of PSA systems. The patent example refers to the separation of N2 from O2 in air currents. Control system equally valid for capturing CO2, NH3 or H2S. Integration of components, which are, adjustment system, control system and alarm system. The control system describes one of the possible control systems applicable to PSA processes. Completely different from that proposed in the device of the present invention, in which the sentinel block is not necessary to control all the control and alarm parameters in real time and simultaneously.

### Patent US4472177A "Control system and method for air fractionation by vacuum swing adsorption"

Description: System and control method for VSA (Vacuum Swing Adsorption) processes. By means of predetermined values of concentrations and pressures introduced to the control system, the alternation between chambers and phases is carried out in each chamber, in the case of adsorption the system is ready for when certain product concentration values are detected at the outlet a process cutoff is imposed. In the same way, when desorption is carried out, this process will be interrupted when values lower than a certain threshold are detected.

Analysis: VSA process control. Structures are presented for the control of valves and switches (switches) that interconnect a programmable controller with the separation system. A variable time system is presented that controls each of the process stages carried out by the separation process control system. The specific case treated is a VSA process, with two parallel adsorption columns, two pretreatment chambers downstream of the columns and two upstream desorbed chambers. Although the PSA process proposed for the present invention uses vacuum systems to produce desorption by pressure, it also uses entrainment through explosive injections inside the desorption chambers to achieve the extraction of adsorbed gases in the shortest possible time. in the porous material, as well as the extraction by excess pressure from the adsorption pressure to the atmospheric pressure, therefore the systems are completely different.

### Patent US4696680 "Method and apparatus for the selective separation of gaseous coal gasification products by pressure swing adsorption"

Description: System for separating gases by PSA process of a mixture composed of these from a coal gasifier. The objective is to sequentially separate the gases in a discrete way (H2, CH4, CO, CO2, ..) thanks to their different adsorption / desorption pressures. These pressures range from atmospheric pressures to pressures of 5 to 35 bar (g). In a first phase, CO2 and H2S are adsorbed, in a second, CO, H2 and CH4. The H2 outlets are used to pressurize the following adsorption chambers, reaching those values of 5 to 35 bar (g). The main objective is to obtain a high purity of H2, 99.7%, and with less than 0.01% of sulfur compounds. Process sequence: The mixture is introduced into the first adsorption column and this is pressurized so that the gases are sequentially adsorbed. After reaching the desired pressure level, the chamber begins to depressurize. With the decrease in pressure, the set of gases (H2, CO, CH4) is evacuated first. Continuing the descent to Patm and reaching negative relative pressures, the acid group (CO2, H2S) is evacuated. The two sequential outputs are derived to different process lines. By repeating the process for each set of gases, pressurizing and depressurizing appropriately, H2, CO and CH4 are separated completely and with high levels of purity on the one hand and CO2 and H2S on the other.

Analysis: Sequential separation process of gas mixture by PSA process. Mainly oriented to gases from coal gasification (H2, CO, CH4, CO2 and H2S). The treated pressures range from 0 bar to 35 bar to be able to obtain all the gases separately with high purity. The system describes the PSA process sequentially, not continuously and without the ability to allow control over the concentration of the output streams (27) or (44) of the system proposed as the device of the present invention. Process developed for gasification prior to combustion of a gaseous fuel and therefore to work at high pressure, compared to that of the present invention developed to treat gases from combustion and therefore at low pressure.

### Patent WO 2009/073928 "A plant and process for recovering carbon dioxide"

Description: PSA system with adsorption material type Zeolite X or Y. Originally for treatment with gaseous effluents with a high percentage of CO2 (> 50%), such as vents from soft drink carbonation plants. The inlet conditions to the system are between (10-90°C) and (1-2) bar. Desorption is carried out in a vacuum range between (2-50) kPa or (0.02-0.5) bar. As an extra energy recovery process, it sends the CO2-poor stream that leaves the chamber during adsorption, which will be between (10-40°C), to cool the liquid refrigerant that works by cooling the rings of the vacuum pumps. The system aims to simulate a pseudo-continuum in which the two chambers of the system work alternately, one in adsorption and the other in desorption. The transition of the chamber that ends desorption, at P approx. 0.02 bar, up to atmospheric pressure, is carried out by interconnecting both chambers, since pressures are balanced because one is depressurized and the other is 2 bar. In this way, it is avoided to use the common methods of emptying the chamber or purges that are carried out in the interval that occurs between the end of adsorption and the beginning of desorption (this type of purge is usually carried out of the "Heavy purge" type with product streams with a high concentration of CO2 or "Light purge" when they are waste streams with a lower concentration of CO2).

Analysis: PSA system, adsorbent material Zeolites X or Y, treatment of CO2 concentration in gaseous effluents with high concentrations of this gas (> 50%). Adsorption processes: Between 10 and 40°C and between 1 and 2 bar. Desorption process: In vacuum between 0.02 and 0.5 bar. It appears to meet the false continuum conditions by alternating adsorption / desorption chambers. Novel characteristics: Depressurization is carried out by interconnection between chambers. In the WO 2009/073928 system, both chambers are connected, so it is a parallel derivative and the equalization process ends when the pressures in both chambers are equalized. In our device of the invention, recirculation occurs through the vacuum pumps to the desired concentration of CO2. The system describes the PSA process allowing equalization between chambers but without the ability to allow control over the concentration of the output currents (27) or (44) of the system proposed as the device of the present invention.

### Patent US3885927 "Removal of carbon dioxide from gas streams"

Description: Capture of carbon dioxide from gas streams less polar than carbon dioxide, passing the flow through a matrix of Zeolite type X, silicon / aluminum ratio <1.15. Particularly effective process when the adsorption phase is applied with temperatures above 20°C and low percentages of carbon dioxide in the streams.

Analysis: Adsorption system with Zeolites X. It is recommended to apply low temperatures in the process, starting at around 20°C, since it assumes that during the process there will be an increase due to compressions and other pretreatment phases. Defines the range as admissible if it is between 30 and 80°C. It makes special reference to the fact that the CO2 in the initial gas stream has a partial pressure greater than 25 mbar. It is more a scientific-technical patent for research than for engineering development, so the presentation of a specific operating procedure is not appreciated. The system describes the PSA process directly without the ability to allow control over the concentration of the outlet streams (27) or (44) of the system proposed as the device of the present invention.

### Patent US5689974A "Method and apparatus for pre-purification for air cryogenic separation plant"

Description: Pre-purification method for the separation of water vapor and CO2 from an air stream for its subsequent derivation to the cryogenics phase. It states that the flow can be operated by adsorption at high temperatures without precooling.

Analysis: The method includes the steps of: Adsorption: At defined pressure and temperatures between 10 and 45°C. Depressurization from P adsorption. Followed by phases of heating, cooling and repressurization. It is recommended to carry out the adsorption with introduction of the flow into the chamber at speeds between 0.05 and 0.4 m / s. The chamber will have an initial tray with the appropriate adsorbent to remove the moisture from the flow and another tray to capture the CO2. The system describes the PTSA process directly without the ability to allow control over the concentration of the output streams (27) or (44) of the system proposed as a device of the present invention.

### Patent US5906675 "Air purification process"

Description: System of three adsorption chambers with zeolites and activated alumina in parallel. The process has three steps: The first, a PSA, is carried out in the first two chambers (acting alternately in adsorption / desorption) while the third chamber is in thermal regeneration.

Analysis: PSA adsorption process. Alternating three chambers in parallel, working respectively on adsorption, desorption and regeneration. The cameras have five levels to capture the compounds. The system describes the PTSA process directly without the ability to allow control over the concentration of the third or fifth output streams of the system proposed as a device of the present invention.

### Patent US6106593A "Purification of air"

Description: Prior to a cryogenic separation of components of the air stream, it is passed through an alumina matrix to remove moisture, a 13X Zeolite matrix to adsorb carbon dioxide and finally through a type X Zeolite matrix. without calcium binder to adsorb nitrous oxides and, depending on the gas, ethylene.

Analysis: Conditioned by adsorption for subsequent cryogenization process. TSA process. Division of the chambers into three divisions (Activated Alumina, 13X Zeolite and X Zeolite). The system describes the PSA process allowing equalization between chambers but without the ability to allow control over the concentration of the output currents (27) or (44) of the system proposed as the device of the present invention.

### Patent EP1226860B1 "Method of operating a thermal swing adsorption system and corresponding apparatus"

Description: Gas treatment process to remove from the effluent, or at least significantly reduce, the percentages of CO2 and H2O vapor. This method is especially useful when the treated gas is to be used in cryogenic separation or air purification processes. The reason for the favorable removal of carbon dioxide for cryogenic processes is because this compound tends to liquefy and, where appropriate, freeze when the effluent as a whole is brought to the cryogenic state.

Analysis: TSA adsorption process. Chambers divided into differentiated sections with different adsorbents. The moisture will be captured with silica gel, alumina or activated alumina. The CO2 will be adsorbed by zeolite 13 X. The adsorption is recommended to be carried out at temperatures between 10 and 50°C. The system describes the PSA process allowing equalization between chambers but without the ability to allow control over the concentration of the output currents (27) or (44) of the system proposed as the device of the present invention.

### Patent US6273939 "Process for purifying a gas stream of its N2O impurities"

Description: TSA process to purify gaseous streams, such as air, mainly from N2O and traces of CO2 or C2H4. The adsorbent material used for the removal is Zeolite (preferably Si / AI ratio 1 to 1.5), carrying it out at temperatures between -40 and 80°C.

Analysis: TSA process to increase reliability of industrial plants. Main objective: Removal of N2O from outgoing streams. It uses Zeolites as adsorbing material. The system describes the TSA process without the ability to allow control over the concentration of the output streams (27) or (44) of the system proposed as the device of the present invention.

### Patent EP0449576A1 "Purifying fluids by adsorption"

Description: Prior to a cryogenic separation of components of the air stream, it is passed through an alumina matrix to remove moisture, a 13X Zeolite matrix to adsorb carbon dioxide and finally through a type X Zeolite matrix. without calcium binder to adsorb nitrous oxides and, depending on the gas, ethylene.

Analysis: Conditioned by adsorption for subsequent cryogenization process. TSA process. Division of the chambers into three divisions (Activated Alumina, 13X Zeolite and X Zeolite). The system describes the PSA process allowing equalization between chambers but without the ability to allow control over the concentration of the output currents (27) or (44) of the system proposed as the device of the present invention.

### Patent US4770676 "Recovery of Methane from Land Fill Gas"

Description: Integrated PTA-PSA system capable of separating currents formed by the mixture of CH4 (30-70%) and CO2 (70-30%) and other traces of hydrocarbons in series. The first stage separates impurities by TSA adsorption and the second by PSA adsorption separates CH4 from CO2. Designed to separate CH4 and CO2 from streams where both gases are in the majority compared to the rest that constitute only traces.

Analysis: The system describes a first TSA adsorption process that separates impurities followed by a second PSA process that separates CH4 from CO2. Designed for different gaseous streams, it does not allow equalization between chambers and neither does it have the ability to allow control over the concentration of the output streams (27) or (44) of the system proposed as a device of the present invention.

### Patent US20030047037A1 "Process for Removal of Carbon Dioxide for Use in Producing Direct Reduced Iron"

Description: PSA adsorption system formed by several columns in parallel with several adsorption layers made up of different solid adsorbent materials. Desorption is carried out by countercurrent vacuum.

Analysis: The system describes a PSA adsorption process that separates the CO2 from the gas stream but does not have the capacity to allow control over the concentration of the outlet streams (27) or (44) of the system proposed as a device for the present invention.

### Patent application ES 2407584A2 "Process for Removal of Carbon Dioxide for Use in Producing Direct Reduced Iron"

Description: PTSA adsorption system consisting of several columns in parallel using 13X Zeolites and / or Active Carbon as adsorbent material. Desorption is carried out by vacuum favoring extraction through heating cycles.

Analysis: The system describes a PTSA adsorption process that separates CO2 from the gas stream. It does not have the capacity to allow control over the concentration of the outlet streams (27) or (44) of the system proposed as the device of the present invention and is based on the use of a different PSA process.

### DESCRIPTION OF THE INVENTION

The present invention describes a device and a method for recovering gaseous substances from gas flows. Said method is based on performing the PSA adsorption/desorption process of the gas flow although by means of an inert adsorbent porous material selective to the gaseous substance to be separated, performed under operating conditions and by means of a method which enables efficiencies similar to the other existing systems at very competitive costs in comparison.

The invention is applicable to a multitude of gaseous substances, although substances which are within the group of greenhouse gases are preferred, mainly carbon dioxide, although the invention is also viable for recovering other greenhouse effect substances, such as water vapor, suspended particles, nitrogen oxides and sulfur oxides.

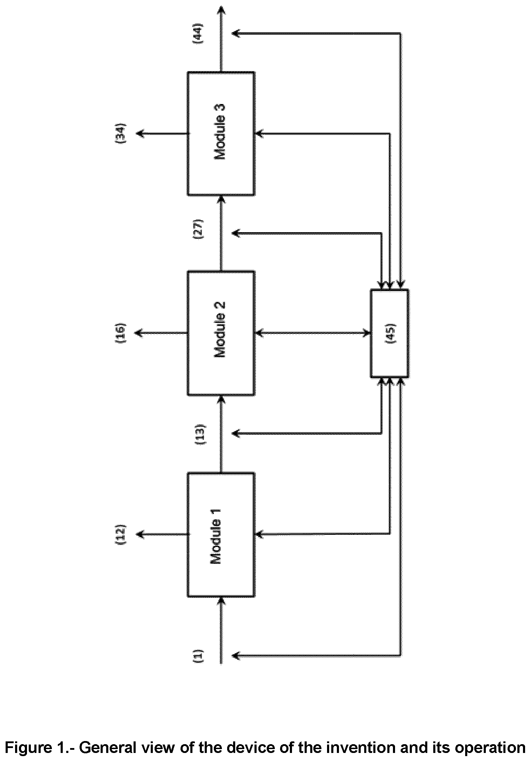

The method of the invention is based on a cycle of two or three sequential phases first comprising a treatment of the gases to be separated (module 1), second, a separation of gases (module 2) and third, a purification of the separated gas (module 3), the latter being optional depending on the characteristics of the gas flow enriched with the substance to be separated (as seen in Figure 1).

By applying the same system for gas treatment, gas separation and gas purification (optional) with different adsorbent porous materials, previously selected, it is and can be used to separate any inlet gas flow to the system in order to enrich the final outlet flow in the previously selected gases, being applicable to any composition since the PSA adsorption/desorption process proposed, the equipment used and the porous materials proposed are inert and do not produce intermediate substances which are potentially dangerous or harmful to the environment. Likewise, the operating pressures and temperatures are relatively low and moderate (respectively) to pose a risk to the operation.

Module 1 accommodates the gases entering this phase in pressure, temperature and composition, such that from a first inlet flow (1) it gives the result of two outlet flows, a first dry gas flow prepared to enter the second phase of gas separation (13) and a second outlet flow made up of the first removed gases, mainly suspended particles, water vapor and sulfur oxides (12).

Module 2, by means of a process of separation and concentration by physical and chemical PSA adsorption, obtains from the first outlet flow (13) coming from module 1 two outlet flows: a third outlet flow (27) with a concentration of the gaseous substances to be extracted greater than those of the first inlet flow, and a fourth outlet flow (16) with a concentration of the gaseous substances to be extracted lower than those of the first inlet flow (13).

And finally, module 3, by means of a process of separation and concentration by physical and chemical PSA adsorption similar to that of the second phase, although adapted to the composition of the gas flow to be treated, which obtains from the third outlet flow coming from the previous phase (27) two outlet flows: a fifth outlet flow (44) with a concentration of the gaseous substances to be extracted greater than those of the third outlet flow coming from the previous phase, and a sixth outlet flow (34) with a concentration of the gaseous substances to be extracted lower than those of the third outlet flow coming from the previous phase.

Depending on the specific parameters of the method and the requirements of the regulations that must be met at all times, the method can have the three previous modules, only the first two, be iterative, repeating any of the three previous modules in several steps, such that the first outlet flow (13) from module 1 constitutes the inlet flow of each module 2; and the third outlet flow (27) of each module 2 is the inlet flow to each module 3.

The second outlet flow (12) from module 1 will be managed either as liquid waste or it will be able to be neutralized with bases such as NaOH or KOH, for the chemical stabilization thereof prior to being evacuated. The fourth (16) and sixth (34) outlet flows, being gaseous, will be managed according to the content thereof as value-added atmospheric gases or they will be released directly to the outside, and they will be biologically inert.

In the event that the substance is selected from greenhouse exhaust gases, the inlet flow (1) to module 1 can come from any flow comprising greenhouse gases, preferably at least one gas flow of combustion exhaust, hereinafter referred to as exhaust flow, for example, from thermal power plants with combustion of fossil fuels, biomass combustion plants, boilers that use fossil fuels or biomass to produce primary energy, etc.

Initially, said inlet flow (1) is directed, as the first inlet flow to module 1, in order to carry out the first gas treatment phase in which the temperature and pressure are controlled in order to dry said flow by removing water, nitrogen and sulfur oxides, unburned substances and other solids in suspension, preparing the first outlet flow (13) for the injection thereof into module 2, in which the gas-separation process is carried out, with a composition which enables the operation under design conditions thereof according to the specifications of the adsorbent material. The second outlet flow (12) incorporates the separated water, the sulfur oxides, the unburned substances, partially the nitrogen oxides and other solids in suspension removed from the inlet gas flow (1).

Module 2 treats the first outlet flow (13) from module 1 by means of a PSA adsorption/desorption process to separate the gases selected, enriching the third outlet flow (27) from module 2. The separation of gases occurs according to the selectivity of the adsorption process which has a certain adsorbent porous solid. In the preferred case, the porous material used is active and selective against CO₂ and CO.

The adsorption and desorption processes are performed in one or more adsorption/desorption reactors (14), in series, the adsorption process acting first, followed by that of PSA desorption, indefinitely repeating these processes in an alternating manner. In order to achieve a continuous operation of module 2, it is necessary to double the number of adsorption/desorption reactors (14), such that while half performs the adsorption process, the other half performs the PSA desorption process working in parallel.

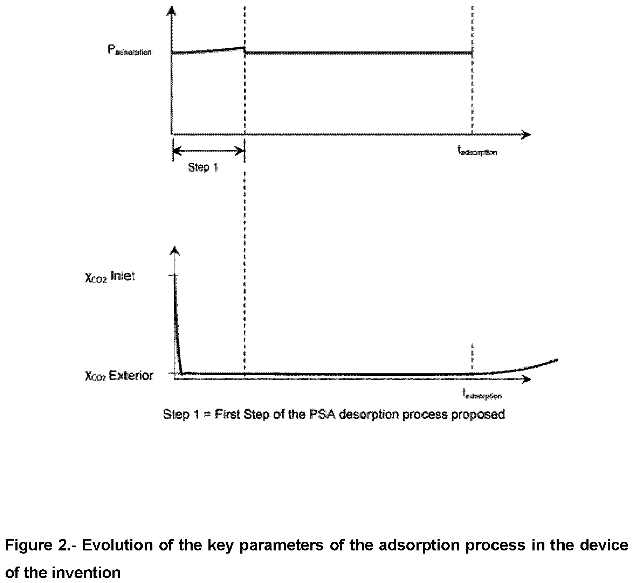

During the adsorption process (Figure 2), the first outlet flow (13) flows through the inner and outer surfaces of the adsorbent porous material arranged inside the adsorption/desorption reactors. The fourth outlet flow (16) is depleted in the selected gases and can be released to the outside with a composition very similar to that of the outside atmosphere, or by trying to have it recovered as industrial gases. The selected gases remain inside the adsorption/desorption reactors (14) adhered by means of Van der Waals forces, weak bonds and hydrogen bonds, among other forces of physical/chemical origin which are present. The adsorption process ends when the adsorbent porous material inside the adsorption/desorption reactors (14) becomes saturated and stops adsorbing the selected gases.

During the adsorption process, the adsorption/desorption reactors (14) which perform the adsorption process are connected to the first outlet flow (13) from module 1 and are isolated from the PSA desorption system. During the PSA desorption process, the adsorption/desorption reactors (14) are isolated from the first outlet flow (13) from module 1 and are connected to the vacuum system which will enable the extraction of the gases adhered to the adsorbent porous material contained therein in order to enrich the third outlet gas flow (27) from module 2, enriched in the selected gases.

The fourth outlet flow (16) from module 2 consists of the gas flow depleted in the selected gases coming from the adsorption/desorption reactors (14) which are performing the adsorption process, which will be able to be managed as atmospheric gases with added value, or it will be emitted directly to the outside atmosphere if it is biologically inert.

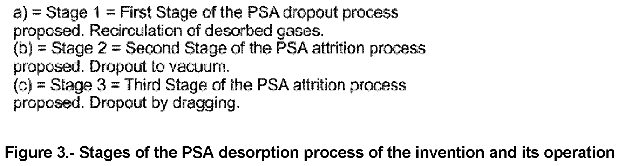

In Module 2, the desorbed gas stream follows three different stages. First, see Figure 3. During the first step of the PSA desorption process the flow (21) is reinjected into the inlet gas flow to module 1, while the control system (45) of the system as a whole has it. Secondly, during the second step of the PSA desorption process, the gases are accumulated in several buffer tanks for storage before leaving this phase, constituting the third outlet gas flow (27) from module 2, ending when it is possible to desorb approximately the same mass of selected gases that was initially adsorbed during the adsorption process (Figure 3 describes the evolution of the key parameters during the PSA desorption process proposed in the present invention).

The third step is repeated several times, as many as necessary to finish the second step, interrupting it, consisting of the reinjection of the gases desorbed and accumulated in the aforementioned tanks, for the injection thereof, as a flow (24) into the adsorption/desorption reactors (14) which are performing the PSA desorption process in an explosive manner, when the pressure thereof reaches a threshold value below a predetermined vacuum (approximately 80%), in order to pull the largest number of molecules from the selected gases and improve the behavior of the vacuum pumps used to perform the PSA desorption process. At the end of each of the third steps, the second step of the desorption process continues to be performed.

In the event that the concentration of the selected gases present in the third outlet flow (27) from module 2 is less than that required by specifications of the system, a module 3, based on the previous PSA adsorption/desorption process will be included.

The operation of the module 3 will be similar and in series to the operation of the previous module 2, using as inlet gas flow the third outlet flow (27) enriched in the selected gases coming from module 2, using the same (or different) adsorbent porous material as the one used in module 2, provided that it is selective towards the gases selected for the separation and purification thereof.

The sixth outlet gas flow (34) from the third gas purification phase may be reinjected to the adsorption/desorption reactors (31) which are performing the adsorption process in both module 2 and module 3; or be emitted directly to the outside atmosphere, depending on the composition thereof and whether or not it is biologically inert, as determined through the control system (45) of the invention.

In order to achieve the continuous operation of the system as a whole, modules 2 and 3 will each have half of the adsorption/desorption reactors (14), (31) performing the adsorption process, while the other half will be performing the PSA desorption process. When both processes end, the control system (4) will alternate the operation thereof, achieving that half of the adsorption/desorption reactors (14), (31) of each module are performing the adsorption process at all times, continuously and without affecting the flow rate of the first inlet flow (1) to module 1.

In the meantime, the other half of the adsorption/desorption reactors of each phase will be performing the described PSA desorption process. At all times, the control system (45) will attempt to adjust the adsorption (t_{adsorption}) and desorption (t_{desorption}) times as much as possible, such that it will always meet the condition that t_{desorption} ≤ t_{adsorption} in each of modules 2 and 3.

The threshold points or values of the concentration of the selected gases in the desorbed flows (27) and (44), the concentration of the selected gases in the inlet flow to the system (1), the amount of water and other greenhouse gases present in the inlet flow to the system (1), the pressure and temperature conditions thereof, the mass and/or volumetric concentrations thereof; and the adsorption and desorption times of the adsorption/desorption reactors (14), (31) of modules 2 and 3 are, apart from multiple signals internal to the system as a whole, the main inputs which govern the control system (45) of the invention.

It is important to note that the proposed device and method can, in theory, be used at any pressure and temperature, although, depending on the features, known in the state of the art, of the PSA adsorption/desorption systems using porous materials as adsorbent material, pressures below 10 bar(g) have been selected as the operating pressure range, and operating temperatures not higher than 50 °C, in order to protect the porous material used, obtaining an acceptable performance of the system as a whole and reducing the operation and maintenance costs.

In the case of the adsorption steps to be performed by the adsorption/desorption reactors (14), (31), of modules 2 and 3, the system will try to optimize the adsorption process by maximizing the amount of the selected gases such that the adsorbed amount is maximized as much as possible, exceeding 95% of the amount present in the first inlet flow to the system and as close as possible to 100%.

The basic parameters of the method are as follows:
- the nature and concentration of the substance or substances to be separated present in the first inlet flow (1) to module 1.
- the minimum percentage by weight which is required to be removed of each substance, with respect to the percentage of said substance contained in the first inlet flow (1) to module 1.
- the minimum concentration of each separate substance required for the third outlet gas flow (27) of module 2 or the fifth outlet gas flow (44) of module 3 (optional), as required.
- The system as a whole will enable the installation and operation thereof regardless of the source of greenhouse gases, pressure, temperature and concentration of the selected gaseous substance, adapting the operation thereof automatically.
- The system as a whole is modular, interchangeable, compact and scalable.

Based on said basic parameters, the operating pressure and temperature parameters of each of the three modules are selected, while with the mass concentration of the gases selected to be separated during the complete process, the different steps of the PSA desorption process will then be performed in modules 2 and 3 (optional), with the aim of achieving the mass concentration of the gases to be separated selected for the desired concentration and/or separation thereof, by means of reinjection processes in different points of the systems which make up the three modules, in order to achieve adsorption of the selected gases as much as possible in order to be separated from the main inlet gas flow (1) to module 1, increasing the adsorption and desorption yields of the system as a whole, by means of a complex control system (45).

By means of the method described in the present invention, a recovery of gaseous substances from gas flows is carried out with significant energy savings (around 45%), savings in equipment cost (around 75%) and savings in operation and maintenance costs (around 75%) compared to the methods for separating gases and capturing greenhouse gases currently in operation, as well as preventing the generation of products harmful for the environment, with the savings in carbon footprint and environmental impact that this implies.

Additionally, the method of the invention favors synergy between companies since the by-products of the method can be acquired as raw material by other companies.

### DESCRIPTION OF THE DRAWINGS

To complement the description that is being made and in order to help a better understanding of the characteristics of the invention, according to a preferred example of a practical embodiment thereof, a set of drawings is attached as an integral part of said description. where, for illustrative and non-limiting purposes, the following has been represented:
Figure 1.- General view of the device of the invention and its operation.
Figure 2.- Evolution of the key parameters of the adsorption process in the device of the invention.
Figure 3.- Stages of the PSA desorption process of the invention and its operation.

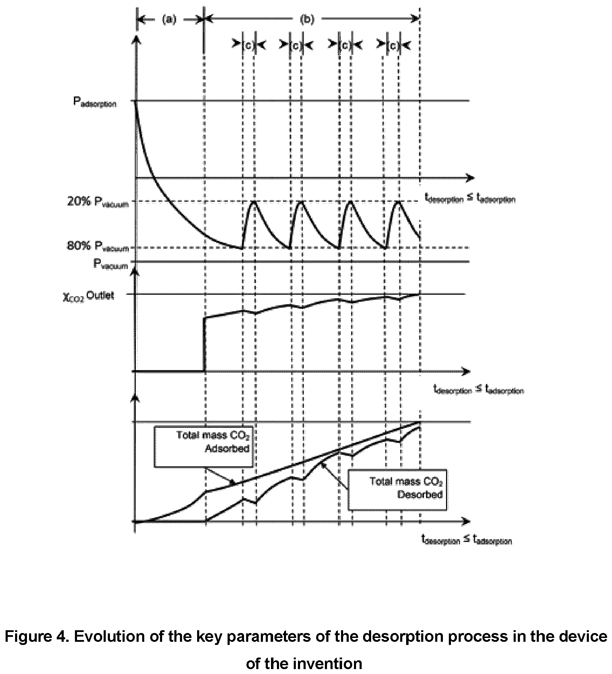

Figure 4. Evolution of the key parameters of the desorption process in the device of the invention.
Figure 5.- View of the installation of the invention and its operation.

### PREFERRED EMBODIMENT OF THE INVENTION

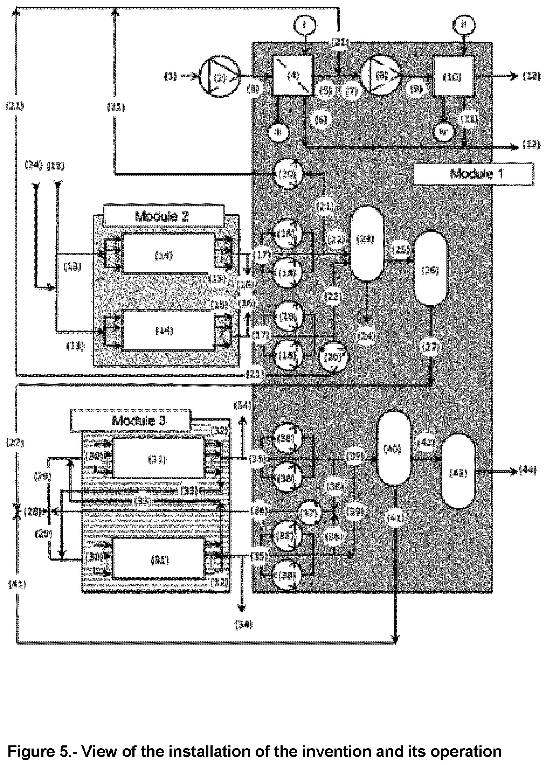

Next, with reference to the attached Figure 5, a preferred embodiment of the device of the invention is explained, applied to the recovery of a component gaseous substance from the inlet gas flow to the invention.

An inlet gas flow (1), mainly coming from fossil fuel combustion systems for obtaining primary energy, enters module 1 for the analysis thereof, modification in pressure, temperature and content in other greenhouse gases, impurities and water vapor. This flow (1) is mobilized from the installation in which it is generated by an impulsion system (2) and is led by means of a system of pipes for the inlet and treatment thereof in module 1, constituting the gas flow (3) the characteristics of which are similar to those of the flow (1), but with a constant flow rate in accordance with the features of the control system (45) of the invention.

The flow (3) has the following concentrations: CO₂ (1% - 25%), water vapor (0% - 25%), O₂ (0% - 35%) and other, N₂, Ar, other greenhouse gases, unburned substances, ashes, etc., in accordance with the features of the previous combustion installation. The temperature range is between 60 °C and 800 °C and pressure is slightly above atmospheric pressure. The control system (45) depending on the characteristics of the flow (1) will manage the equipment of module 1 and the operation thereof in order to optimize the operation of the system as a whole.

The gas flow (3) is treated in a first group of gas exchangers (4) in order to reach a temperature of around 40 °C or less. The first group of exchangers uses water, air or any fluid (i) in order to cool the flow (3), obtaining an outlet coolant flow (iii) in accordance with the legal limits for the treatment or evacuation to the outside thereof.

Due to the features of the cooling process of the flow (3), the excess water present condenses, together with a portion of the greenhouse gases, unburned substances, ashes and other unwanted components, constituting the flow (6) of water to be subsequently treated. The outlet flow from this group of exchangers (5), at a temperature of around 40 °C or lower, is semi-dry with water content in saturation in accordance with the temperature thereof.

This gas flow is joined by the gas flow (21) coming from module 2, which will be explained later, constituting the flow (7), which is compressed to pressures below 10 bar(g) in the compression system (8), at the outlet of which the gas flow (9) prepared for the inlet thereof into the drying system (10) is obtained.

The drying system (10) removes the water present in the flow (around 99.9%), obtaining the first outlet flow (13) from module 1 for the sending thereof to module 2. The flow (13) is modified to the temperature (20 °C - 45 °C), pressure (1 - 9 bar(m)) and moisture (Approx. 0%) in order to optimize the adsorption process as much as possible. The drying system is cooled by a coolant fluid similar to the one used in the heat exchange group (4), using inlet (ii) and outlet (iv) flows in accordance with the legal limits for the treatment or evacuation thereof to the outside.

The drying system (10) produces a second outlet flow (11) in which the condensed water coming from the flow (9), other sulfur oxides, unburned substances, ash and other greenhouse gases are removed. The flows (6) and (11) join together and constitute the liquid flow (12) which is the second outlet flow from module 1, which is treated prior to the evacuation outside thereof or for the subsequent recovery thereof.

The operation of module 1 is adjusted by means of the control system (45) adapting the operation thereof at all times to the needs of the adsorbent material of modules 2 and 3; and the characteristics of the flow (1).

The outlet flow (13) from module 1 is injected into module 2 in the adsorption/desorption reactors (14) which are performing the adsorption process, according to the instructions of the control system (45). After passing through these adsorption/desorption reactors (14), the outlet flow of each one (15) is directed to a single outlet conduit from module 2 to be returned to module 1 in which, as flow (16) it is released to the outside (if it is not biologically active) or to the evacuation installation in the combustion system from which the flow (1) is initially taken.

In the other adsorption/desorption reactors which are performing the PSA desorption process, the outlet flow of the gases located inside the adsorption/desorption reactors (14) constitutes the flow (17), which has an enrichment in the selected gases for the variable separation thereof over time depending on the vacuum extraction process, going from a CO₂ concentration of 0.4% to approximately 65% - 85% depending on the characteristics of the flow (1).

By means of the vacuum pumps (18), the flow (17) is extracted and driven by the compressor (20) in order to favor the injection thereof as flow (21) to module 1 for the mixing thereof with the flow (5) during the first phase of the desorption process described above, ending the function thereof when the control system (45) so determines. At this point, the flow (17) becomes the flow (22) which is stored in the first buffer tank (23) of module 2. Once the maximum filling pressure is reached, the rest passes as flow (25) to the second buffer tank (26) of module 2 from which the flow (27) is obtained for the extraction thereof to the outside or for the injection thereof as inlet flow to module 3.

The flow (24) starts from the first buffer tank (23) of module 2 and is used as a pulling flow in the third phase of the PSA desorption process described above and is injected directly into the adsorption/desorption reactors (14) which are performing the desorption process.

The operation of module 2 is adjusted by means of the control system (45) adapting the operation of the active systems located in module 1 at all times to the needs of average and maximum CO₂ concentration in the outlet flow from module 2 and for the purpose of optimizing the desorption process of the adsorption/desorption reactors (14) which perform the desorption process in module 2.

The outlet flow (27, 28) from module 2 before being injected into module 3 in the adsorption/desorption reactors (31) which are performing the adsorption process, according to the instructions of the control system (45), is mixed with the flow (36), constituting the flow (29), into which the flow (33) is mixed, in order to constitute the flow (30), which is the one that is finally injected as inlet flow to the adsorption/desorption reactors (31) which are performing the adsorption process in module 3. The flows (33) and (36) are explained below.

After passing through these adsorption/desorption reactors (31) the outlet flow from each adsorption/desorption reactor (32) is directed for the injection thereof to the other adsorption/desorption reactors as flow (33) for the mixture thereof with the flow (29) or it is carried by means of an outlet conduit from module 3 to be returned to module 1 in which, as flow (34) it is released to the outside (if it is not biologically active) or to the evacuation installation in the combustion system from which the flow (1) is initially taken, according to what is indicated by the control system (45) of the invention.

In the other adsorption/desorption reactors (31) which are performing the PSA desorption process, the outlet flow of the gases located inside the adsorption/desorption reactors constitutes the flow (39), which has an enrichment in the selected gases for the variable separation thereof over time depending on the vacuum extraction process, going from a CO₂ concentration of 65% - 85% to approximately 95% - 100% depending on the characteristics of the flow (1).

By means of the vacuum pumps (38), the flow (39) is extracted and driven by the compressor (37) in order to favor the injection thereof as flow (36) to the flow (28) in order to constitute flow (29) during the first phase of the desorption process described above, ending the function thereof when the control system (45) so determines. At this point, the flow (35) becomes the flow (39) which is stored in the first buffer tank (40) of module 3. Once the maximum filling pressure is reached, the rest goes as flow (42) to the second buffer tank (43) of module 3 from which the flow (44) is obtained for the extraction thereof to the outside.

The flow (41) starts from the first buffer tank (40) of module 3 and is used as a pulling flow in the third phase of the PSA desorption process described above and is injected directly into the adsorption/desorption reactors (31) which are performing the desorption process.

The operation of module 3 is adjusted by means of the control system (45) adapting the operation of the active systems located in module 1 at all times to the needs of average and maximum CO₂ concentration in the outlet flow from module 3 and for the purpose of optimizing the desorption process of the adsorption/desorption reactors which perform the desorption process in module 3.

## Claims

1. Installation to recover gaseous substances from gaseous streams, figure 1, **characterized in that** it comprises:
- A first module for the treatment of atmospheric gases, equipped with a first inlet conduit to transport to the first set of heat exchangers (4), the compression system (8) and the drying system (10), a first stream of inlet gases (1) gaseous comprising at least one substance to be recovered. Said first module for the treatment of atmospheric gases, is equipped with the rest of the active systems that Modules 2 and 3 require for their correct operation (vacuum pumps (18), (38), impulsion systems and compressors (20), (37 ), appropriate pipes and valves, buffer tanks (23), (26), (40), (43), electrical system and control system), according to what is required for the correct operation of the control system (45). Likewise, it is provided with a first outlet conduit to mobilize the first outlet stream (13) towards Module 2 after its adaptation in composition, pressure and temperature; a second outlet conduit to mobilize the liquid stream (12), a second inlet conduit to manage the gases adsorbed in the adsorption / desorption reactors (14) of Module 2, a third outlet conduit to send the enriched gas stream in at least one substance to be separated (27) to Module 3, a third inlet conduit to manage the adsorbed gases in the adsorption / desorption reactors (31) of Module 3 and a fourth outlet conduit to send the enriched gas stream in at least one substance to be separated (44) to the outside.

2. Installation for recovering gaseous substances from gaseous streams according to claim 1, **characterized in that** it additionally comprises:
- a set of sensors that allow the monitoring of the conditions of pressure, temperature and concentration of the substance to be concentrated in the outlet stream (13).
- a control system (45) that allows to control the optimal characteristics of the concentration of the selected gaseous substance, the water content of the stream (13), its pressure and temperature to optimize the operation of Modules 2 and 3.
- a control system (45) that allows the operation of the system at its optimum point of pressure, concentration, humidity and temperature throughout Modules 2 and 3, acting on the different atmospheric gas separation equipment that make up the Module 1.

3. Installation for recovering gaseous substances from gaseous streams according to claim 1, **characterized in that** it comprises:
- a second module for separating atmospheric gases, equipped with a first inlet conduit to transport to the adsorption / desorption reactors (14), a pipe and enough valves for the correct operation of the described PSA adsorption / desorption process, a first Inlet gas stream (9) gaseous that comprises at least one substance to be recovered and that comes from the first outlet stream of Module 1. Likewise, it is provided with a first outlet conduit to mobilize the desorbed gas stream after the PSA desorption process (15) to be sent to Module 1 where the described desorption process will be controlled, according to what is required for the correct operation of the control system (45).

4. Installation for recovering gaseous substances from gaseous streams according to claim 1, **characterized in that** it additionally comprises:
- a set of sensors that allow the monitoring of the conditions of pressure, temperature and concentration of the substance to be concentrated in the outlet stream (27).
- a control system (45) that allows controlling the average and maximum concentration in the substance to be separated obtained in the output current of Module 2 (27) according to what is required by technical specifications, whose operation is automatic and adaptable without modification , to the characteristics of the input current to the system (1) and the output current (27).
- a control system (45) that allows the operation of the system at its optimum point of pressure, concentration, humidity and temperature throughout Module 2, acting on the different atmospheric gas separation equipment that make up Module 1.

5. Installation for recovering gaseous substances from gaseous streams according to claims 1 and 3, **characterized in that** it comprises:
- a third atmospheric gas purification module, equipped with a first inlet conduit to transport to the adsorption / desorption reactors (31), a pipe and enough valves for the correct operation of the described PSA adsorption / desorption process, a first Inlet gas stream (44) gaseous that comprises at least one substance to be recovered and that comes from the fifth outlet stream of Module 1. Likewise, it is provided with a first outlet conduit to mobilize the desorbed gas stream after the PSA desorption process (32) to be sent to Module 1 where the described desorption process will be controlled, according to what is required for the correct operation of the control system (45).

6. Installation for recovering gaseous substances from gaseous streams according to claims 1 and 3, **characterized in that** it additionally comprises:
- a set of sensors that allow the monitoring of the conditions of pressure, temperature and concentration of the substance to be concentrated in the outlet stream (44).
- a control system (45) that allows controlling the average and maximum concentration in the substance to be separated obtained in the output current of Module 3 (44) according to what is required by technical specifications, whose operation is automatic and adaptable without modification , to the characteristics of the input current to the system (1) and the output current (44).
- a control system (45) that allows the system to operate at its optimum point of pressure, concentration, humidity and temperature throughout Module 3, acting on the different atmospheric gas treatment equipment that make up Module 1.

7. Instalacion para recuperar sustancias gaseosas a partir de corrientes gaseosas de acuerdo con las reivindicaciones 1 y 3, caracterizada porque comprende:
- la interconexion de uno o mas Modulos 1 con uno o mas Modulos 2, caracterizada porque la corriente de salida (13) de cada Modulo tipo 1 es la corriente de entrada de cada Modulo tipo 2.

8. Installation for recovering gaseous substances from gaseous streams according to claims 1 and 3, **characterized in that** it additionally comprises:
- a set of sensors that allow the monitoring of the conditions of pressure, temperature and concentration of the substance to be concentrated in the outlet streams (13) and (27).
- a control system (45) that allows controlling the average and maximum concentration in the substance to be separated obtained in the output streams of Module 1 (13) and Module 2 (27) according to what is required by technical specifications, whose operation is automatic and adaptable without modification, to the characteristics of the input current to the system (1) and to the output current (13) and (27).
- a control system (45) that allows the operation of the system at its optimum point of pressure, concentration, humidity and temperature throughout Modules 1 and 2 and 3, acting on the different atmospheric gas treatment equipment that make up Module 1.

9. Installation for recovering gaseous substances from gaseous streams according to claims 1, 3, 5 and 7, **characterized in that** it comprises:
- the interconnection of one or more Modules 1 with one or more Modules 2 and with one or more Modules 3, **characterized in that** the output current (13) of each Module 1 is the input current of each Module 2 and the output current (27) of each Module 2 is the input current of each Module 3.

10. Installation for recovering gaseous substances from gaseous streams according to claims 1, 3, 5 and 7, **characterized in that** it additionally comprises:
- a set of sensors that allow the monitoring of the conditions of pressure, temperature and concentration of the substance to be concentrated in the outlet streams (13), (27) and (44).
- a control system (45) that allows controlling the average and maximum concentration in the substance to be separated obtained in the output streams of Module 1 (13), Module 2 (27) and Module 3 (44) depending on what is required by technical specifications, whose operation is automatic and adaptable without modification, to the characteristics of the input current to the system (1) and the output current (13), (27) and (44).
- a control system (45) that allows the operation of the system at its optimum point of pressure, concentration, humidity and temperature throughout Modules 1, 2 and 3, acting on the different atmospheric gas treatment equipment that make up Module 1.

11. Procedure to recover gaseous substances from gaseous streams, using the installation described in any one of claims 1 to 10, separating a substance of interest **characterized in that** it comprises the following steps:
- introduction of the first inlet stream (1) into Module 1 for the treatment of atmospheric gases, resulting in a first outlet stream (13) with a concentration in the substance to be recovered greater than that of the first inlet stream (1 );
- measurement of the flow, concentration, pressure and temperature characteristics of the substances in the stream (1) that are to be recovered in the first outlet stream of Module 2 (27).
- comparison of the previous measurements with some pre-established criteria through the control system (45).
- adaptation of the operating conditions of concentration, pressure and temperature of the first inlet stream (1) to Module 1 and of the outlet of the first outlet stream (13).
- control and adjustment of the adsorption and desorption times to try to comply with the pre-established operating criteria of the system as a whole, alternating adsorption / desorption reactors (14) of Module 2 to achieve continuous operation that does not affect the installation gas generator to be separated.
- Acting on the equipment that make up Module 1 to carry out the PSA adsorption and desorption processes in the adsorption / desorption reactors (14) of Module 2 described at their optimum point of operation and performance.
- adaptation of the working conditions of concentration, pressure and temperature of the first inlet stream (13) to Module 2 and of the outlet of the first outlet stream (27).

12. Procedure to recover gaseous substances from gaseous streams, according to claim 11, **characterized in that** it additionally comprises the purification of a substance of interest **characterized in that** it comprises the following steps:
- introduction of the first inlet stream (1) into Module 1 for the treatment of atmospheric gases, resulting in a first outlet stream (13) with a concentration in the substance to be recovered greater than that of the first inlet stream (1 );
- measurement of the flow, concentration, pressure and temperature characteristics of the substances in the stream (1) that are to be recovered in the first outlet stream of Module 3 (44).
- comparison of the previous measurements with some pre-established criteria through the control system (45).
- adaptation of the operating conditions of concentration, pressure and temperature of the first inlet stream (1) to Module 1 and of the outlet of the first outlet stream (13).
- control and adjustment of the adsorption and desorption times to try to comply with the pre-established operating criteria of the system as a whole, alternating adsorption / desorption reactors (14) of Module 2 to achieve continuous operation that does not affect the installation gas generator to be separated.
- Acting on the equipment that make up Module 1 to carry out the PSA adsorption and desorption processes in the adsorption / desorption reactors (14) of Module 2 described at their optimum point of operation and performance.
- adaptation of the working conditions of concentration, pressure and temperature of the first inlet stream (13) to Module 2 and of the outlet of the first outlet stream (27).
- control and adjustment of the adsorption and desorption times to try to comply with the pre-established operating criteria of the system as a whole, alternating adsorption / desorption reactors (31) of Module 3 to achieve continuous operation that does not affect the installation gas generator to be separated.
- action on the equipment that make up Module 1 to carry out the PSA adsorption and desorption processes in the adsorption / desorption reactors (31) of Module 3 described at their optimum operating and performance point.
- adaptation of the operating conditions of concentration, pressure and temperature of the first inlet stream (27) to Module 3 and of the outlet of the first outlet stream (44).

13. Installation for recovering gaseous substances from gaseous streams according to claim 11, **characterized in that** the substance to be recovered is a greenhouse gas.

14. Installation for recovering gaseous substances from gaseous streams according to claim 13, **characterized in that** the greenhouse gas is selected from carbon dioxide, nitrogen, nitrogen gases and phosphorus and / or sulfur gases.

15. Installation for recovering gaseous substances from gaseous streams according to claim 14, **characterized in that** the substance to be recovered is nitrogen oxides.

16. Installation for recovering gaseous substances from gaseous streams according to any one of claims 13 to 15, **characterized in that** the first inlet stream (1) comes from a combustion exhaust stream.

17. Installation for recovering gaseous substances from gaseous streams according to claim 16, **characterized in that** the substance to be recovered is a greenhouse gas.

18. Installation for recovering gaseous substances from gaseous streams according to claim 17, **characterized in that** the greenhouse gas is selected from carbon dioxide, nitrogen, nitrogen gases and phosphorus and / or sulfur gases.

19. Installation for recovering gaseous substances from gaseous streams according to claim 18, **characterized in that** the substance to be recovered is sulfur oxides, water vapor and / or oxygen.

20. Installation for recovering gaseous substances from gaseous streams according to any one of claims 17 to 19, **characterized in that** the first inlet stream (1) comes from a combustion exhaust stream.

21. Procedure to recover gaseous substances from gaseous streams, using the installation described in any one of claims 1 to 10, carrying out an extraction of a substance of interest **characterized in that** it comprises the following steps:
- introduction of the first inlet stream (1) into Module 1 for the treatment of atmospheric gases, resulting in a first outlet stream (13) with a concentration in the substance to be recovered greater than that of the first inlet stream (1 );
- measurement of the flow, concentration, pressure and temperature characteristics of the substances in the stream (1) that are to be recovered in the first outlet stream of Module 2 (27).
- comparison of the previous measurements with some pre-established criteria through the control system (45).
- adaptation of the operating conditions of concentration, pressure and temperature of the first inlet stream (1) to Module 1 and of the outlet of the first outlet stream (13).
- control and adjustment of the adsorption and desorption times to try to comply with the pre-established operating criteria of the system as a whole, alternating adsorption / desorption reactors (14) of Module 2 to achieve continuous operation that does not affect the installation gas generator to be separated.
- Acting on the equipment that make up Module 1 to carry out the PSA adsorption and desorption processes in the adsorption / desorption reactors (14) of Module 2 described at their optimum point of operation and performance.
- adaptation of the working conditions of concentration, pressure and temperature of the first inlet stream (13) to Module 2 and of the outlet of the first outlet stream (27).

22. Installation for recovering gaseous substances from gaseous streams according to claim 20, **characterized in that** the substance to be recovered is a greenhouse gas.

23. Installation for recovering gaseous substances from gaseous streams according to claim 22, **characterized in that** the greenhouse gas is selected from carbon dioxide, nitrogen, nitrogen gases and phosphorus and / or sulfur gases.

24. Installation for recovering gaseous substances from gaseous streams according to claim 23, **characterized in that** the substance to be recovered is carbon dioxide.

25. Installation for recovering gaseous substances from gaseous streams according to any one of claims 22 to 24, **characterized in that** the first inlet stream (1) to Module 1 comes from a combustion exhaust stream.
